# EUROPEAN PATENT SPECIFICATION

(11) **EP 4 462 238 B1**
(45) Date of publication and mention of the grant of the patent: **25.03.2026**
(21) Application number: 23876319.7
(22) Date of filing: 14.08.2023
(51) Int. Cl.: G06F 3/04845, G06F 3/0481, G06F 3/0485, G06F 3/0486, G06F 3/04883, G06F 3/04886, G06F 1/16, G06F 9/451

(54) **WINDOW DISPLAY METHOD, ELECTRONIC DEVICE, AND COMPUTER-READABLE STORAGE MEDIUM**
FENSTERANZEIGEVERFAHREN, ELEKTRONISCHE VORRICHTUNG UND COMPUTERLESBARES SPEICHERMEDIUM
PROCÉDÉ D'AFFICHAGE DE FENÊTRE, DISPOSITIF ÉLECTRONIQUE ET SUPPORT DE STOCKAGE LISIBLE PAR ORDINATEUR

(30) Priority: 12.10.2022 CN 202211245058
(43) Date of publication of application: 13.11.2024
(73) Proprietor: Honor Device Co., Ltd., Shenzhen, Guangdong 518040 (CN)
(72) Inventor: JIA, Yugang, Shenzhen, Guangdong 518040 (CN); CHEN, Yanan, Shenzhen, Guangdong 518040 (CN)
(74) Representative: Goddar, Heinz J.
(86) International application number: PCT/CN2023/112886
(87) International publication number: WO 2024/078114

(56) References cited:
- EP-A1- 2 696 269
- WO-A1-2020/136311
- WO-A1-2021/227770
- WO-A1-2022/052747
- CN-A- 108 900 693
- CN-A- 114 710 681
- US-A1- 2014 033 119
- US-A1- 2019 266 705

## Description

This application claims priority to Chinese Patent Application No. 202211245058.3, filed with the China National Intellectual Property Administration on October 12, 2022 and entitled "WINDOW DISPLAY METHOD, ELECTRONIC DEVICE, AND COMPUTER-READABLE STORAGE MEDIUM".

### TECHNICAL FIELD

This application relates to the technical field of terminal devices, and in particular to a window display method, an electronic device, and a computer-readable storage medium.

### BACKGROUND

When a display interface of an electronic device displays an interface of one or more applications, the interface of the application can be displayed in the form of a window, and a user can adjust the position and size of the window through a certain gesture. In the process of adjusting the position and size of the window, the window may be non-proportionally scaled. For example, the original window may be stretched or widened. During the deformation of the window, rounded corners on the window will also deform to a certain degree, consequently affecting the display effect of the window and further affecting user experience.

WO 2021/227770 A1 discloses: An application window display method and an electronic device. The method comprises: displaying a split-screen interface which comprises a first window, a second window, and a first control for partitioning the first window and the second window, a first application being run in the first window, and a second application being run in the second window; detecting a first operation of a user on the first control, the first operation being a sliding operation toward the position of the second window; in response to the first operation, moving the first control to the side of the second window, wherein the width of the second window is reduced, and the width of the first window is increased; detecting that the user stops the first operation; and in response to the stop of the first operation, if the position of the first control satisfies a first preset condition, displaying the first window in a full-screen mode, and displaying the second window over the first window in a floating mode. The method enables a user to quit a split-screen state and rapidly start the split-screen state again without switching an application or interrupting a current application task, so that the user's experience is improved.

### SUMMARY

This application provides a window display method, an electronic device, and a computer-readable storage medium, to solve the problem of deformation of rounded corners of a window during non-proportional scaling of the window in the prior art.

To achieve the foregoing objective, the following technical solutions are used in this application:
According to a first aspect, a window display method is provided and applied to an electronic device, including:
drawing, based on a size of rounded corners of a second window and a content of the second window, the second window on a canvas of the second window when determining that non-proportional scaling is required for a first window displayed on a display interface of the electronic device, where the second window and the first window are of the same size, and a position of the second window on the display interface is the same as a position of the first window on the display interface; displaying the second window on the display interface and hiding the first window when drawing of the second window is completed, wherein the size of the rounded corners of the second window scales proportionally to a current size of the first window or remains unchanged; and displaying the scaled first window on the display interface and hiding the second window when determining that scaling of the first window is completed.

In the foregoing embodiment, because the size of the rounded corners and the content of the second window can be rapidly determined, the speed of drawing the second window is high, and the normal rounded corners can be displayed. Because the second window and the first window are of the same size and in the same position, the second window can cover the first window. Therefore, during the non-proportional scaling of the first window, the second window is displayed, and the first window is hidden. When the scaling of the first window is completed, the first window is displayed. In the process of the non-proportional scaling of the first window, a display effect of the normal rounded corners can be presented on the display interface, thereby improving user experience.

In an embodiment, the method further includes: determining that non-proportional scaling is required for the first window when a first operation for scaling the first window is detected and the first window enters a first region on the display interface.

In an embodiment, before the determining that non-proportional scaling is required for the first window, the method further includes:
performing proportional scaling on the first window when the first operation for scaling the first window is detected and the first window does not enter the first region.

In the foregoing embodiment, when the first window moves on the display interface, a region for proportional scaling of the first window and a region for non-proportional scaling of the first window exist on the display interface, such that deformation of the first window is adapted to the shape of the display interface, thereby improving user experience.

In an embodiment, before the performing proportional scaling on the first window, the method further includes: creating a surface control object of the second window according to a surface control object of the first window, where the surface control object of the second window is at a lower hierarchy level than the surface control object of the first window, such that there is a parent-child relationship between the second window and the first window, and the second window covers the first window and moves following the first window. Moreover, the surface control object of the second window is created before performing proportional scaling on the first window, and when the second window is drawn later, the surface control object of the second window can be rapidly called, thereby improving the drawing speed of the second window.

In an embodiment, the first operation is a slide operation, and after the displaying the second window on the display interface, the method further includes: in response to the slide operation, moving the second window according to a slide position of the slide operation on the display interface, such that an animation of scaling the second window is consistent with the slide position of the slide operation, thereby achieving an effect of motion effect following the finger, and improving user experience.

In an embodiment, the method further includes: when it is detected that the slide operation is canceled (e.g., the finger leaves the display interface), determining that scaling of the first window is completed, and stopping playback of an animation of scaling the second window, thereby forming an effect of motion effect following the finger.

The size of the rounded corners of the second window is determined according to a current size of the first window, that is, the size of the rounded corners of the second window is determined according to the current size of the second window, such that in the scaling process of the second window, the size of the rounded corners is continuously changed to make the size of the rounded corners adapted to the size of the second window, thereby presenting the second window with a better form on the display interface.

In an embodiment, the content of the second window is determined according to a Gaussian blur effect of a content of the first window, thereby rapidly determining the content of the second window and rapidly drawing the second window.

According to a second aspect, an electronic device is provided, and includes a processor. The processor is configured to execute a computer program stored in a memory to implement the window display method according to the first aspect.

According to a third aspect, a computer-readable storage medium is provided. The computer-readable storage medium stores a computer program. The computer program, when executed by a processor, implements the window display method according to the first aspect.

It should be understood that, for beneficial effects of the second aspect to the sixth aspect, reference may be made to the relevant description in the first aspect, and details are not described herein again.

### BRIEF DESCRIPTION OF DRAWINGS

FIG. 1 is a schematic diagram of a display window on a display interface of an electronic device according to an embodiment of this application;
FIG. 2 is a schematic diagram of deformation of rounded corners of a window according to an embodiment of this application;
FIG. 3 is a scenario diagram of multi-window display according to an embodiment of this application;
FIG. 4A to FIG. 4C are a scenario diagram of enlarging a window according to an embodiment of this application;
FIG. 5A to FIG. 5C are a scenario diagram of shrinking a window according to an embodiment of this application;
FIG. 6 is a scenario diagram of split-screen display according to an embodiment of this application;
FIG. 7 is a scenario diagram of adjusting a window size in a split-screen display status according to an embodiment of this application;
FIG. 8 is a scenario diagram of scaling a window during unfolding a foldable screen according to an embodiment of this application;
FIG. 9 is a schematic flowchart of a window display method according to an embodiment of this application;
FIG. 10 is a flowchart of a window display method in a multi-window display scenario according to an embodiment of this application;
FIG. 11 is a flowchart of implementing a window display method by a client process and a server process according to an embodiment of this application;
FIG. 12 is a diagram of a software architecture of an electronic device according to an embodiment of this application;
FIG. 13 is a software implementation flowchart of a window display method according to an embodiment of this application; and
FIG. 14 is a schematic structural diagram of an electronic device according to an embodiment of this application.

### DESCRIPTION OF EMBODIMENTS

In the following description, specific details such as a specific system structure and technology are provided for the description rather than limitation, so as to thoroughly understand embodiments of this application. However, it should be clear to those skilled in the art that this application can also be implemented in other embodiments without these specific details. In other cases, detailed descriptions of well-known systems, apparatuses, circuits, and methods are omitted to prevent unnecessary details from obscuring the description of this application.

It should be understood that when used in the specification and appended claims of this application, the term "including" and/or "comprise" indicates the existence of described features, entities, steps, operations, elements, and/or components, but does not exclude the existence or addition of one or more other features, entities, steps, operations, elements, components, and/or combinations thereof.

It should be further understood that the term "and/or" used in the specification and appended claims of this application refers to any combination and all possible combinations of one or more associated listed items, including these combinations.

As used in the specification and appended claims of this application, the term "if" may be interpreted as "when", "once", "in response to a determination", or "in response to detection" depending on the context. Similarly, the phrases "if determined" or "if [a described condition or event] is detected" may be interpreted as meaning "once determined", "in response to a determination", "once [the described condition or event] is detected", or "in response to detection of [the described condition or event]" depending on the context.

In addition, in descriptions of this application, terms such as "first" and "second" are merely used for distinguishing descriptions, and cannot be understood as an indication or implication of relative importance.

Reference to "an embodiment" or "some embodiments" described in the specification of this application means that a specific characteristic, structure or feature described in combination with this embodiment is included in one or more embodiments of this application. Therefore, the statements "in an embodiment", "in some embodiments", "in some other embodiments", "in further some embodiments", etc. in the differences in the specification do not necessarily refer to the same embodiment, but mean "one or more but not all embodiments", unless otherwise specially emphasized in other ways.

A window display method provided in an embodiment of this application is applied to an electronic device. Exemplarily, the electronic device in this embodiment of this application may be a device that can be held/operated by one hand, such as a mobile phone, a tablet computer, a handheld computer, a personal digital assistant (personal digital assistant, PDA), an augmented reality (augmented reality, AR)\virtual reality (virtual reality, VR) device, a media player, and a wearing device. This embodiment of this application does not impose special limitations on the specific form/type of the electronic device. The electronic device includes but not limited to devices equipped with iOS^{®}, Android^{®}, Microsoft^{®}, Harmony OS (Harmony OS), or other operating systems.

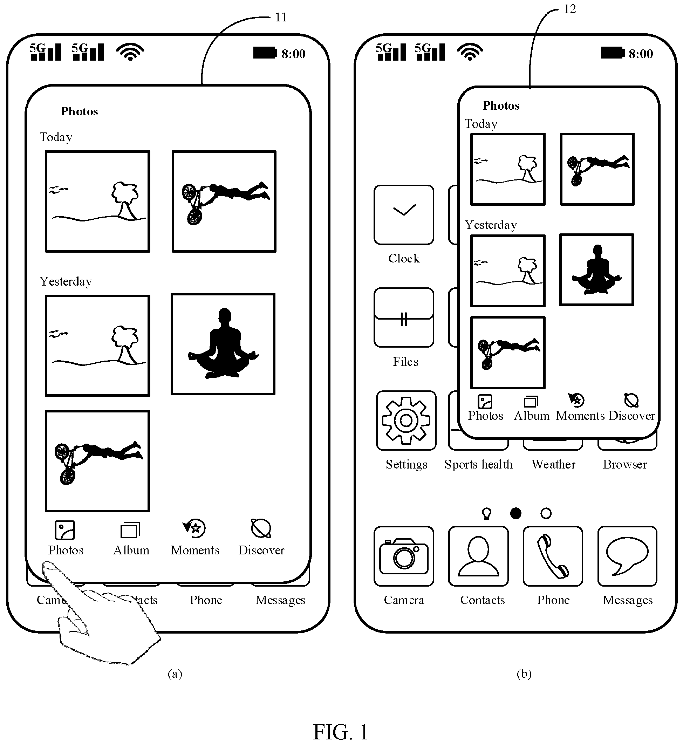

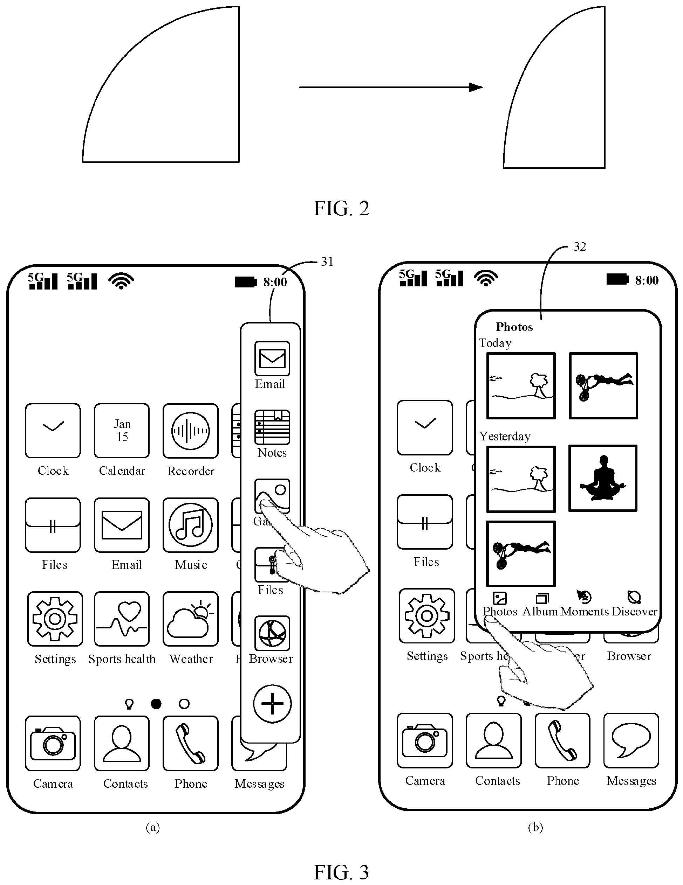

As shown in FIG. 1(a), a display interface of the electronic device displays a window 11, and the window 11 displays an interface of a gallery application. The user can adjust the size of the window 11 and change the position of the window through a preset gesture (e.g., an operation of dragging one of four corners of the window). For example, the user obtains a shrunk window 12 shown in FIG. 1(b) through an operation of dragging the lower left corner of the window diagonally upward. In the process of adjusting the position and size of the window, the window may be non-proportionally scaled. For example, if a shrinking proportion of the window in a width direction is greater than a shrinking proportion of the window in a height direction, a shrinking proportion of rounded corners of the window in the width direction is greater than a shrinking proportion of the rounded corners in the height direction, resulting in a display effect of deformation of the rounded corners of the window shown in FIG. 2, that is, one side of the rounded corners of the window will be squeezed and shortened, consequently affecting the display effect of the window and further affecting user experience.

Therefore, this application provides a window display method. A second window is drawn on a canvas of the second window based on the size of the rounded corners of the second window and the content of the second window when determining that non-proportional scaling is required for a first window displayed on a display interface of an electronic device. The second window is displayed on the display interface and the first window is hidden when the drawing of the second window is completed. Because the content and size of the rounded corners of the second window can be rapidly determined, the second window can be rapidly drawn, and normal rounded corners can be displayed. Because the second window and the first window are the same in position and size, the second window can cover the first window. During the non-proportional scaling of the first window, the first window is hidden, and the second window is displayed, which can obscure the deformed display effect of the rounded corners of the first window, presenting a normal rounded corner size on the display interface. When it is determined that scaling of the first window is completed, the scaled first window is displayed on the display interface, such that the first window is displayed normally according to the scaled size, thereby improving user experience.

The window display method according to an embodiment of this application is exemplarily described below.

First, taking the electronic device being a mobile phone as an example, an application scenario of the window display method according to this embodiment of this application is introduced.

### Scenario 1 Multi-window display scenario

As shown in FIG. 3(a), when the mobile phone displays a desktop on the display interface, if an operation of the user in opening a multi-window application bar is detected, the multi-window application bar 31 is displayed on one side of the display interface. The multi-window application bar 31 displays icons of multiple applications, such as displaying icons of applications of email, notes, gallery, files, browser, and other applications. When the mobile phone detects the operation of the user in tapping on the gallery application icon, a window 32 shown in FIG. 3(b) is displayed, a gallery application interface is displayed in the window 32, and the multi-window application bar is hidden. When the window 32 is displayed on the display interface, the mobile phone can open interfaces of other applications according to the user operation, so as to display multiple windows in the display interface. As shown in FIG. 3(b), when the window 32 is displayed on the display interface, the user can scale the window 32 by dragging any corner of the window 32 with a slide operation.

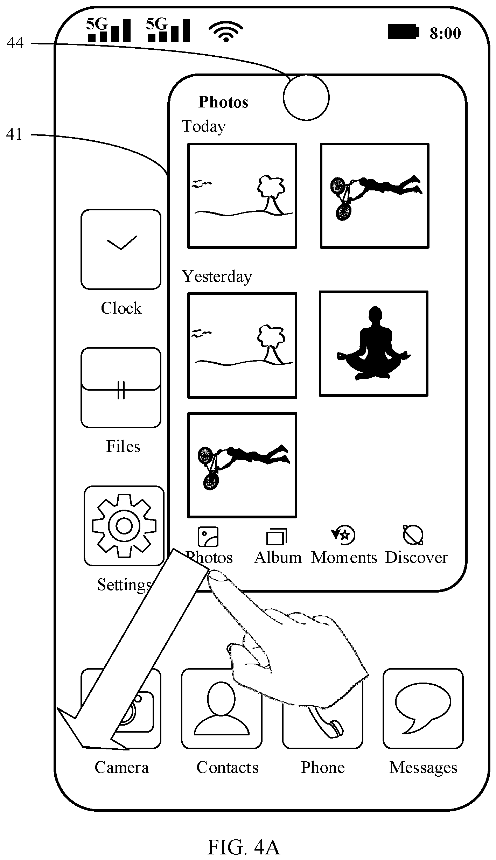

As shown in FIG. 4A, if the operation of the user in dragging the lower left corner of a window 41 diagonally downward is detected, the window gradually enlarges following the dragging operation. If it is determined that the current stage requires proportional enlargement of the window based on the position of the window 41, the mobile phone displays an animation of proportional enlargement of the window 41 on the display interface following the position of the finger. The content of the window 41 is proportionally enlarged, and the rounded corners of the window 41 are proportionally enlarged or remain unchanged.

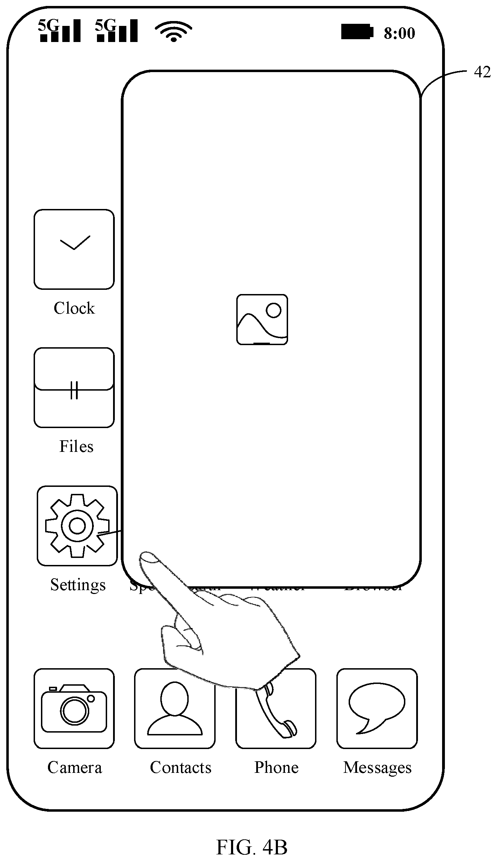

As shown in FIG. 4B, the user continues to drag the lower left corner of the window diagonally downward. If the mobile phone determines that the current stage requires non-proportional enlargement of the window based on the position of the window, the original window 41 is hidden on the display interface, and a window 42 obtained after Gaussian blur processing on the window 41 is displayed. An animation of non-proportional enlargement of the window 42 is displayed on the display interface following the position of the finger. The size of the rounded corners of the window 42 (i.e., the radius of the rounded corners) is proportionally enlarged based on the current window size, or the size of the rounded corners of the window remains unchanged. In an embodiment, the window 42 further displays the icon of the gallery application.

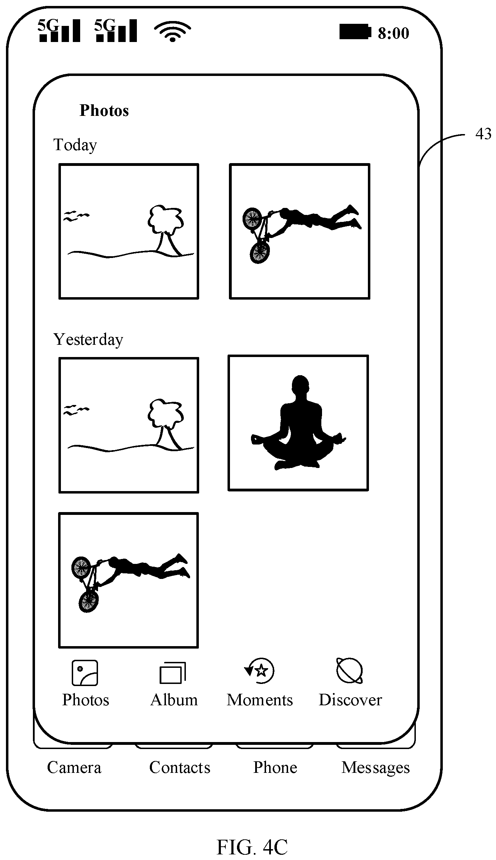

As shown in FIG. 4C, when the mobile phone detects that the finger of the user leaves the display interface, window enlargement completion is determined. The display interface displays an enlarged window 43, and the window 43 displays an interface of the gallery application matched with the window 42 in size.

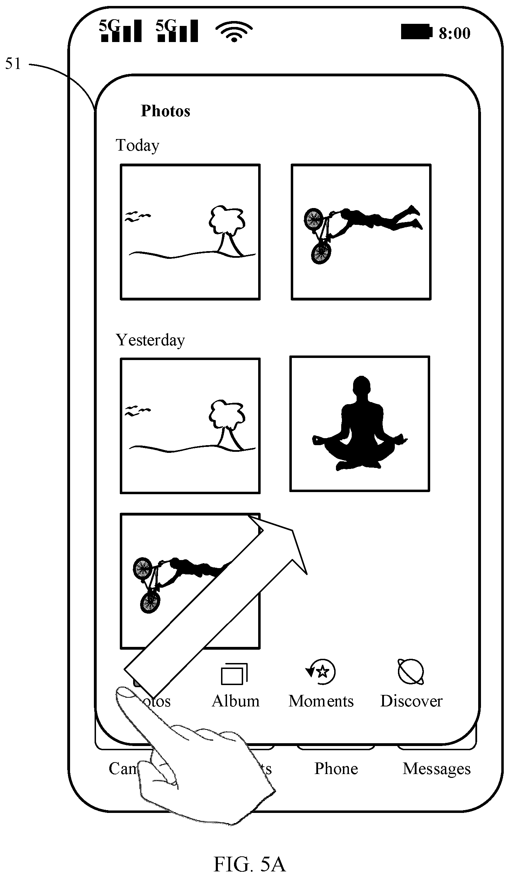

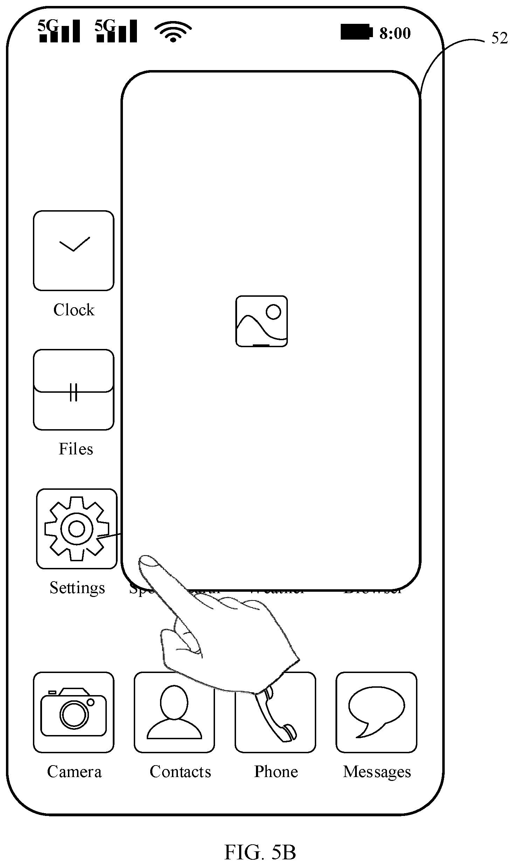

As shown in FIG. 5A, if the mobile phone detects the operation of the user in dragging the lower left corner of a window 51 diagonally upward, the window gradually shrinks following the dragging operation. If it is determined that the current stage requires non-proportional shrinking of the window based on the position of the window, as shown in FIG. 5B, the mobile phone displays, on the display interface, a window 52 obtained after Gaussian blur processing on the window 51. Moreover, the window 51 is hidden, and an animation of non-proportional shrinking of the window 52 is displayed on the display interface following the position of the finger. The size of the rounded corners of the window 52 is proportionally shrunk based on the current window size, or the size of the rounded corners of the window remains unchanged, and the window 52 further displays the icon of the gallery application.

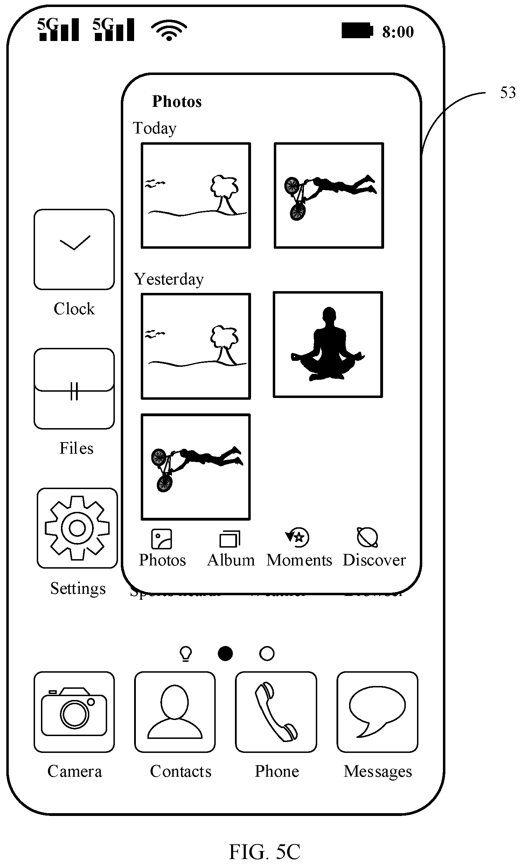

As shown in FIG. 5C, when it is detected that the finger of the user leaves the display interface, window shrinking completion is determined. The display interface displays a shrunk window 53, and the window 53 displays an interface of the gallery application matched with the window 52 in size.

In the foregoing embodiment, during the process of scaling the window, the mobile phone hides the original window on the display interface but displays the window obtained after Gaussian blur processing, thereby obscuring the display effect of the non-proportional scaling of the original window, and ensuring that the normal rounded corners of the window are displayed on the display interface.

### Scenario 2 Split-screen display scenario

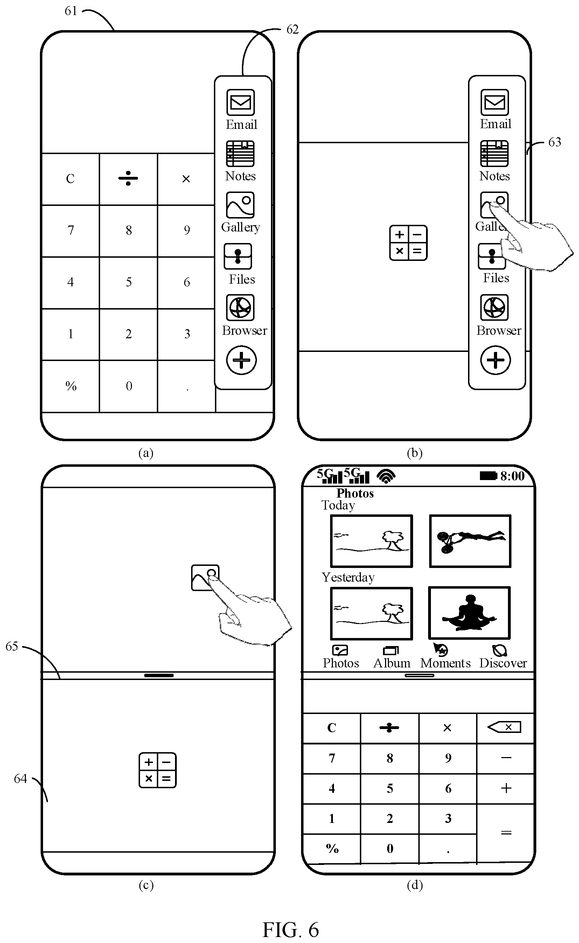

As shown in FIG. 6(a), when the mobile phone displays an interface 61 of a calculator application on the display interface, if an operation of the user in opening the multi-window application bar is detected, the multi-window application bar 62 is displayed on one side of the display interface. As shown in FIG. 6(b), when the mobile phone detects the operation of the user in long press of the icon of the gallery application, the interface of the calculator application is hidden, and a window 63 obtained after Gaussian blur processing on the interface of the computer application is displayed on the display interface, and the size of the window 63 is smaller than that of the display interface. In an embodiment, the window 63 further displays the icon of the calculator application.

As shown in FIG. 6(c), when the user performs long press on the icon of the gallery application, if the mobile phone detects the operation of the user in dragging the icon of the gallery application to the top of the display interface, the window 63 is continuously shrunk to obtain a window 64, and the window 64 is displayed on the lower half of the display interface. Moreover, a split-screen dividing line 65 is displayed above the window 64, a blank area is displayed above the split-screen dividing line 65, and the icon of the gallery application moves in the blank area according to the position of the finger. During the shrinking process of the window 63, the size of the rounded corners of the window 63 is proportionally shrunk or remains unchanged.

As shown in FIG. 6(d), when it is detected that the finger of the user leaves the display interface, the interface of the gallery application is displayed on the upper half of the display interface of the mobile phone, and the interface of the calculator application is displayed on the lower half of the display interface.

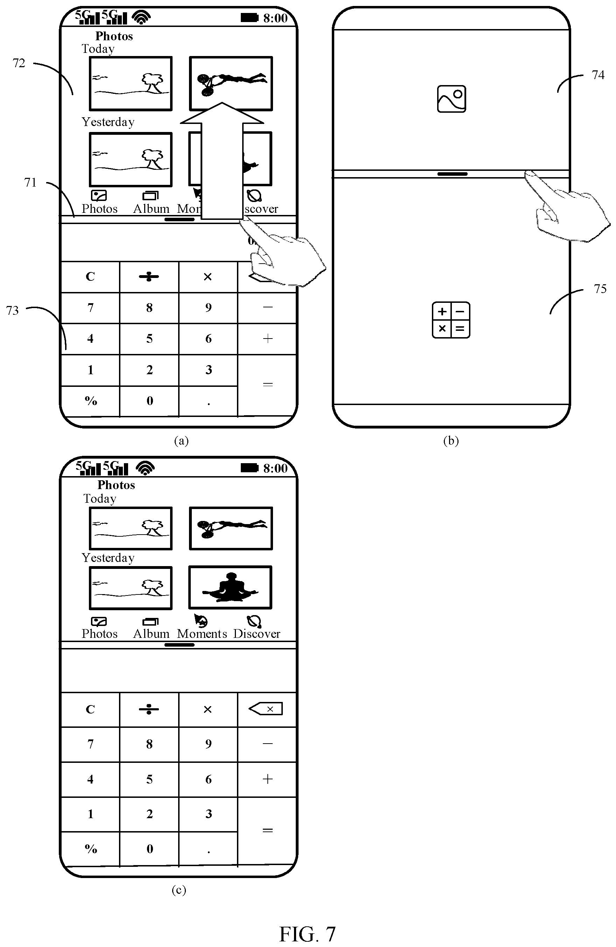

As shown in FIG. 7(a), when the display interface is in split-screen displaying, the display interface displays a split-screen dividing line 71, a window 72 is displayed above the split-screen dividing line, the interface of the gallery application is displayed in the window 72, a window 73 is displayed below the split-screen dividing line 71, and the window 73 displays the interface of the calculator application. If the operation of the user in sliding the split-screen dividing line 71 upward is detected, it is determined that shrinking the window 72 above the split-screen dividing line 71 and enlarging the window 73 below the split-screen dividing line 71 is required. As shown in FIG. 7(b), during the finger sliding process, a window 74 obtained after Gaussian blur processing on the window 72 is displayed above the split-screen dividing line, the window 72 is hidden, a window 75 obtained after Gaussian blur processing on the window 73 is displayed below the split-screen dividing line 71, and the window 73 is hidden. Moreover, an animation of shrinking the window 74 is displayed above the split-screen dividing line 71 following the position of the finger, and an animation of enlarging the window 75 is displayed below the split-screen dividing line 71. The size of the rounded corners of the window 74 and the window 75 is scaled proportionally or remains unchanged.

As shown in FIG. 7(c), when it is detected that the finger of the user leaves the display interface, according to the position of the split-screen dividing line, the interface of the gallery application matched with the window above the split-screen dividing line in size is displayed on the upper half of the display interface, and the interface of the calculator application matched with the window below the split-screen dividing line in size is displayed on the lower half of the display interface.

In the foregoing embodiment, in the process of split-screen display of the two windows, the window obtained after Gaussian blur processing is displayed on the display interface, and the original window is hidden, thereby obscuring the display effect of the non-proportional scaling of the original window, and ensuring the normal display of the rounded corners of the window displayed on the display interface.

### Scenario 3 Foldable screen scenario

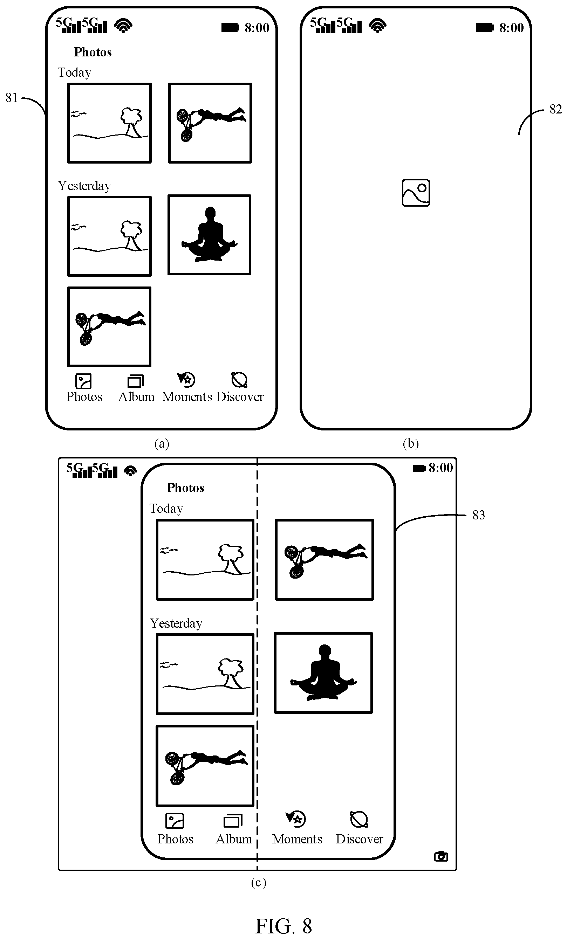

As shown in FIG. 8(a), a display screen of a mobile phone is a foldable screen. When the foldable screen is in a folded state, a display interface of the mobile phone displays an interface 81 of the gallery application, and if the operation of the user in unfolding the foldable screen is detected, it is determined that enlarging the interface of the gallery application is required. As shown in FIG. 8(b), a window 82 obtained after Gaussian blur processing on the interface of the gallery application is displayed on the display interface of the mobile phone, and the original interface of the gallery application is hidden. Moreover, the mobile phone displays an animation of enlarging the window 82 on the display interface following the unfolding degree of the foldable screen, and the size of the rounded corners of the window 82 is proportionally enlarged or remains unchanged.

As shown in FIG. 8(c), when the foldable screen is completely unfolded, the mobile phone displays an enlarged window 83 on the display interface, and the interface of the gallery application with the corresponding size is displayed in the window 83 according to the current size of the window 83.

When the foldable screen is completely unfolded, the display interface of the mobile phone displays the interface of the gallery application, and if the operation of the user in folding the screen, it is determined that shrinking the window 83 is required. As shown in FIG. 8(b), in the process of shrinking the window 83, the display interface of the mobile phone displays the window 82 obtained after Gaussian blur, and an animation of shrinking the window 82 is displayed on the display interface according to the folding degree of the foldable screen. During the shrinking process of the window 82, the size of the rounded corners of the window 82 is proportionally shrunk or remains unchanged. When the foldable screen is in the folded state, the mobile phone displays the interface of the gallery application according to the current window size.

In the foregoing embodiment, in the process of unfolding and folding the foldable screen, the window obtained after Gaussian blur obscures the original window, thereby obscuring the display effect of the non-proportional scaling of the original window, and ensuring the normal display of the rounded corners of the window displayed on the display interface.

A specific implementation method of the window display method according to this embodiment of this application is introduced below.

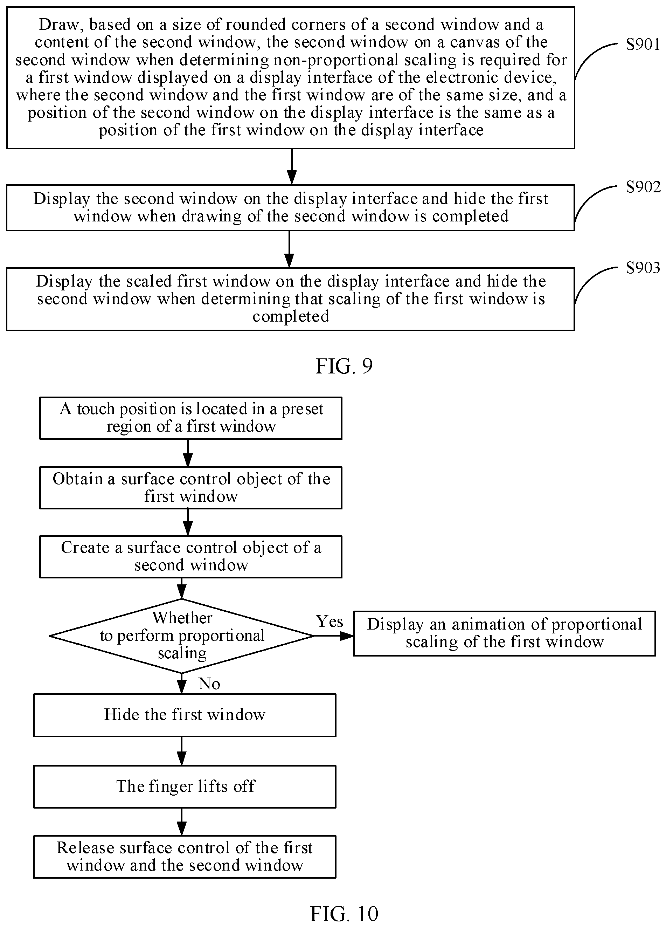

As shown in FIG. 9, the window display method according to an embodiment of this application includes:
S901: The second window is drawn on a canvas of the second window based on the size of the rounded corners of the second window and the content of the second window when determining that non-proportional scaling is required for a first window displayed on a display interface of the electronic device. The second window and the first window are of the same size, and a position of the second window on the display interface is the same as a position of the first window on the display interface.

In an embodiment, when the electronic device detects a preset operation, it is determined that the non-proportional scaling is required for the first window. The preset operation may be an operation (i.e., slide operation) of dragging any corner of the window shown in FIG. 4A to FIG. 4C, may also be a split-screen display operation shown in FIG. 6, and may also be an operation of folding or unfolding the foldable screen shown in FIG. 8.

In another embodiment, when the electronic device detects a first operation for scaling the first window and the first window enters a first region on the display interface, the electronic device determines that non-proportional scaling is required for the first window. The first region refers to a deformation hot region, which is a preset region on the display interface. The scaling process of a window located within the deformation hot region is a non-proportional scaling process. For example, the deformation hot region can be located within a preset width range at the edge of the display interface. The deformation hot region in different scaling scenarios may be the same or different. Exemplarily, the deformation hot region in the multi-screen display scenario and the deformation hot region in the split-screen display scenario may be different regions on the display interface. The first window entering the first region refers to a set position on the first window entering the first region. The set position on the first window may be one of vertexes of the first window, or a center point of the first window, or a specified other position in the first window. For example, the set position on the first window is a center point of a region 44 shown in FIG. 4A. The first operation may be a slide operation of dragging one corner of the window or other operations used for scaling the window (e.g., a multi-finger pinch operation and a three-finger swipe operation).

Correspondingly, when the operation for scaling the first window is detected and the first window does not enter the first region, the electronic device determines that proportional scaling is required for the first window.

For example, as shown in FIG. 4A to FIG. 4C, when the mobile phone detects the slide operation for scaling the window and the center point of the region 44 does not enter the first region, it is determined that proportional scaling is performed on the first window. When the mobile phone detects the slide operation for scaling the window and the center point of the region 44 enters the first region, it is determined that non-proportional scaling is performed on the first window.

It should be understood that in the process of scaling the first window, proportional scaling can be first performed, and then non-proportional scaling is performed; non-proportional scaling can be first performed, and then proportional scaling is performed; or only proportional scaling or only non-proportional scaling can be performed.

The second window and the first window being of the same size refers to the second window and the first window being the same in length and width. Because the second window and the first window are of the same size and in the same position, the second window can completely cover the first window.

In an embodiment, when the electronic device determines to perform non-proportional scaling on the first window, a surface control object of the second window is created according to a surface control object of the first window, such that the surface control object of the second window is at a lower hierarchy level than the surface control object of the first window. The surface control object is used for controlling a set of parameters of the window display content. Each window corresponds to a surface control object. If the surface control object of the second window is located below the hierarchy level of the surface control object of the first window, there is a parent-child relationship between the second window and the first window. The second window moves following the first window, and the second window and the first window are of the same size and in the same position, thereby achieving a process of displaying scaling of the second window at the same position on the display interface in response to the scaling operation of the user on the first window.

In another embodiment, when the electronic device detects scaling of the first window, regardless of whether the scaling is proportional or not, the surface control object of the second window is created based on the surface control object of the first window. For example, when detecting that the user touches any corner of the first window, the surface control object of the second window is created based on the surface control object of the first window, thereby facilitating the rapid drawing of the second window when the first window is non-proportionally scaled.

In an embodiment, the electronic device takes the window currently touched by the user (i.e., a topmost window on the display interface) as the first window. According to activity of the first window, a storage address of the surface control object of the first window is determined from a corresponding task. According to the storage address, the surface control object of the first window can be obtained. According to the surface control object of the first window, the surface control object of the second window that is positioned below the hierarchy level of the surface control object of the first window can be created.

The size of the rounded corners of the second window includes a radius and radian of the rounded corners. The content of the second window is determined according to a Gaussian blur effect of a content of the first window. Exemplarily, a frame obtained after Gaussian blur on the content of the first window can be directly used as the content of the second window. Alternatively, a frame obtained after Gaussian blur on the content of the first window and an icon of an application with the interface within the first window may also be used as the content of the second window. For example, as shown in FIG. 4A to FIG. 4C, FIG. 5A to FIG. 5C, FIG. 6, FIG. 7, and FIG. 8, the icon of the corresponding application is displayed on an upper layer of the Gaussian-blurred frame of the content of the first window.

S902: The second window is displayed on the display interface and the first window is hidden when drawing of the second window is completed.

In an embodiment, when it is determined that non-proportional scaling is required for the first window, the canvas of the second window can be first displayed, and the canvas of the second window is transparently displayed on the display interface, and therefore a current frame of the display interface still displays the first window. Because the size of the rounded corners and the content of the second window can be quickly determined, the second window can be rapidly drawn after the canvas is displayed on the display interface, such that the next frame of the display interface can display the second window, and the first window is not displayed any more.

In other embodiments, when it is determined that non-proportional scaling is required for the first window, the second window is displayed on the display interface after the current frame is drawn on the canvas of the second window, such that the current frame of the display interface displays the first window, and the next frame displays the second window.

Because the second window and the first window are of the same size and in the same position, the second window can completely cover the first window. Due to the normal display of the rounded corners of the second window, during the non-proportional scaling of the first window, the second window is displayed, the first window is hidden, and the window with the normal rounded corners can be displayed on the display interface.

Specifically, after the electronic device draws a first frame of the second window, the display interface displays the second window, the first frame is displayed within the second window, and the first window is hidden. According to the operation for scaling the first window, the first window can continue to be scaled. Because there is the parent-child relationship between the second window and the first window, the second window moves following the first window, and the second window continues to be scaled as well. The electronic device performs the operation of non-proportional scaling according to the first window, and determines the current size and position of the first window, i.e., the current size and position of the second window. Then, the electronic device sequentially draws each frame of the second window according to the current size and position of the second window, and displays the frame on the display interface, thereby forming an effect of an animation of scaling the second window on the display interface.

For example, as shown in FIG. 4A to FIG. 4C and FIG. 5A to FIG. 5C, the operation for scaling the first window is a slide operation, the electronic device determines the size of the second window according to a slide position (i.e., a touch position of the finger) of the slide operation on the display interface, sequentially draws each frame of the second window, and displays the frame, and an effect of an animation of scaling the second window is formed on the display interface. For another example, as shown in FIG. 6, the operation for scaling the first window is a split-screen display operation, the electronic device determines the size of the second window according to the position of the finger on the display interface, sequentially draws each frame of the second window, and displays the frame, and an effect of an animation of scaling the second window is formed on the display interface. For another example, as shown in FIG. 8, the operation for scaling the first window is a foldable screen unfolding operation, the electronic device determines the size of the second window according to the unfolding state of the foldable screen, sequentially draws each frame of the second window, and displays the frame, and an effect of an animation of scaling the second window is formed on the display interface.

In the scaling process of the second window, the size of the rounded corners of the second window may be a fixed size, or may be determined based on the current size of the first window (i.e., the current size of the second window). For example, the size of the rounded corners of the second window can be determined based on the height of the second window and a preset corresponding relationship between the height and the size of the rounded corners. Alternatively, the size of the rounded corners of the second window is determined according to the width of the second window and a preset corresponding relationship between the width and the size of the rounded corners. Alternatively, the size of the rounded corners of the second window is determined according to the area of the second window and a preset corresponding relationship between the area and the size of the rounded corners.

In the scaling process of the second window, the content of the second window is determined according to the current size of the first window, and Gaussian blur is performed on the current frame of the first window to obtain the current frame of the second window, that is, the content of the second window.

In an embodiment, the operation for scaling the first window is a slide operation. In the process that the electronic device scales the first window (i.e., scales the second window) according to a slide position of the slide operation on the display interface, the second window is moved according to the slide position, and the second window moves following the finger. For example, as shown in FIG. 4A to FIG. 4C, the direction of the slide operation is diagonally upward, and a slide start position (i.e., an initial touch position of the finger) of the slide operation is the lower left corner of the first window. During the scaling process of the second window, as the finger moves, the second window also moves diagonally upward, and the touch position of the finger remains at the lower left corner of the second window, thereby forming an effect of a motion effect following the finger of the second window.

In an embodiment, according to the first operation for scaling the first window, the first window is first proportionally scaled and then is non-proportionally scaled, and therefore in the process of proportional scaling of the first window, the second window is not displayed. The electronic device sequentially draws each frame of the first window, and displays the frame, and an effect of an animation of proportional scaling of the first window is displayed on the display interface. In the process of non-proportional scaling of the first window, the first window is hidden. The electronic device sequentially draws each frame of the second window, and displays the frame, and an animation of non-proportional scaling of the second window is displayed on the display interface.

In another embodiment, according to the first operation for scaling the first window, the first window is first non-proportionally scaled and then is proportionally scaled, and therefore in the process of non-proportional scaling of the first window, the first window is hidden. The electronic device sequentially draws each frame of the second window, and displays the frame, and an animation of non-proportional scaling of the second window is displayed on the display interface. In the process of proportional scaling of the first window, the second window is not displayed, and the electronic device sequentially draws each frame of the first window, and displays the frame, and an animation of proportional scaling of the first window is displayed on the display interface.

In another embodiment, according to the first operation, the first window is first non-proportionally scaled, and then is proportionally scaled. When it is determined that non-proportional scaling is required for the first window, the first window is hidden, and the second window is displayed on the display interface. The second window continues to scale until the first window starts to be proportionally scaled, in this case, the first window is still hidden, and the second window is displayed. That is, if the first window is first non-proportionally scaled, an animation of scaling the second window is displayed on the display interface until scaling is completed.

In another embodiment, there is no deformation hot region on the display interface. When it is determined that scaling the first window is required, the first window is hidden, and an animation of scaling the second window is displayed on the display interface.

In the process of non-proportional scaling of the first window, the scaling ratios of the lengths and widths of the rounded corners of the first window are also inconsistent, which leads to deformation of the rounded corners of the first window. Additionally, it takes a relatively long time to re-draw the first window based on the current size of the first window. If an animation of scaling the first window is directly displayed in the process of non-proportional scaling of the first window, stuttering or black screens may occur, causing a mismatch between the effect of the animation of scaling the first window and the slide position in the slide operation, that is, the effect of motion effect following the finger cannot be achieved, and as a result, user experience is affected. The size of the rounded corners of the second window and the content of the second window can be rapidly determined, and therefore the second window can be rapidly drawn on the canvas of the second window, and the first window and the second window can be rapidly switched. The second window is displayed at the position of the first window on the display interface. Therefore, the window with the normal rounded corners is displayed on the display interface, and the effect of the animation of scaling the second window is matched with the slide position in the slide operation, thereby achieving the effect of the motion effect following the finger is achieved.

S903: The scaled first window is displayed on the display interface and the second window is hidden when it is determined that scaling of the first window is completed.

In an embodiment, the operation for scaling the first window is a slide operation. When it is detected that the slide operation is canceled (e.g., the finger leaves the display interface), it is determined that scaling of the first window is completed. In other embodiments, a split-screen operation is performed during the operation for scaling the first window, and when the action of the split-screen operation is completed, it is determined that scaling of the first window is completed. The operation for scaling the first window may also be an operation of unfolding or folding the foldable screen, and when the foldable screen is completely unfolded or folded, it is determined that scaling of the first window is completed.

In an embodiment, when it is determined that scaling of the first window is completed, the animation of scaling the second window is completed. Moreover, information of scaling completion of the first window is sent to an application with the currently displayed interface of the first window. The application adjusts the display content based on the current size of the first window, re-draws the first window according to the adjusted display content, displays the re-drawn first window on the display interface and hides the second window. The second window can be deleted after being hidden.

In the foregoing embodiment, in the process of non-proportional scaling of the first window, the first window is obscured by rapidly drawing the second window with the rounded corners that cannot deform, such that the display interface cannot present a rounded corner deformation display effect in the process of scaling the first window, thereby improving user experience.

A specific implementation process of the window display method in a multi-window display scenario is described below.

As shown in FIG. 10, when the electronic device detects that the finger touches the display interface and the touch position is located at a preset region of the first window (e.g., a first window top bar and any corner of the first window), the touch position of the finger continues to be monitored to determine whether the slide operation is detected, and if the slide operation is detected, it is determined that scaling the first window is required. Then, the electronic device determines a storage address of a surface control object of the first window according to activity of the first window, acquires the surface control object of the first window from the storage address, and creates a surface control object of the second window according to the surface control object of the first window, such that the surface control object of the second window is at a lower hierarchy level than the surface control object of the first window. Exemplarily, the electronic device can obtain the surface control object of the first window by calling a get Visible Full Screen Tasks function and a get Animation Target function, and creates the surface control object of the second window by calling a create Leash function and a new Surface Session function.

After the surface control object of the second window is created, the mobile phone determines whether the first window is proportionally scaled based on the position of the first window on the display interface. If the first window is proportionally scaled, the position and size of the first window are determined according to the slide position of the slide operation on the display interface. Each frame of the first window is sequentially drawn and displayed at the corresponding position based on the size of the first window, thereby displaying an animation of proportional scaling of the first window on the display interface. If the first window is non-proportionally scaled, the canvas of the second window is obtained, and the second window is drawn on the canvas of the second window according to the surface control object of the second window, the size of the rounded corners of the second window, and the content of the second window. Exemplarily, the electronic device can call an apply Transform Handler function to determine whether the first window enters the deformation hot region. If the first window enters the deformation hot region, it is determined that the first window is non-proportionally scaled, and the electronic device can call an on Draw function to draw the second window on the canvas of the second window.

When the second window is drawn, the first window is hidden, and the second window is displayed. The position and size of the second window are determined according to the slide position of the slide operation on the display interface. Each frame of the second window is sequentially drawn at the corresponding position according to the size of the second window and displayed, thereby displaying an animation of scaling the second window on the display interface. When the operation of finger liftoff is detected, it is determined that the scaling of the first window is completed. The surface control object of the first window and the surface control object of the second window are released, and the second window is hidden. According to the current size of the first window, the content matched with the size is displayed in the first window. Exemplarily, the electronic device can call a do Window Trans Anim function and a show Task Leash function to make a previous frame of the display interface display the first window and a current frame display the second window, thereby achieving a display effect that the second window obscures the first window.

In an embodiment, a client process and a server process in the electronic device run at the same time to implement the above window display method.

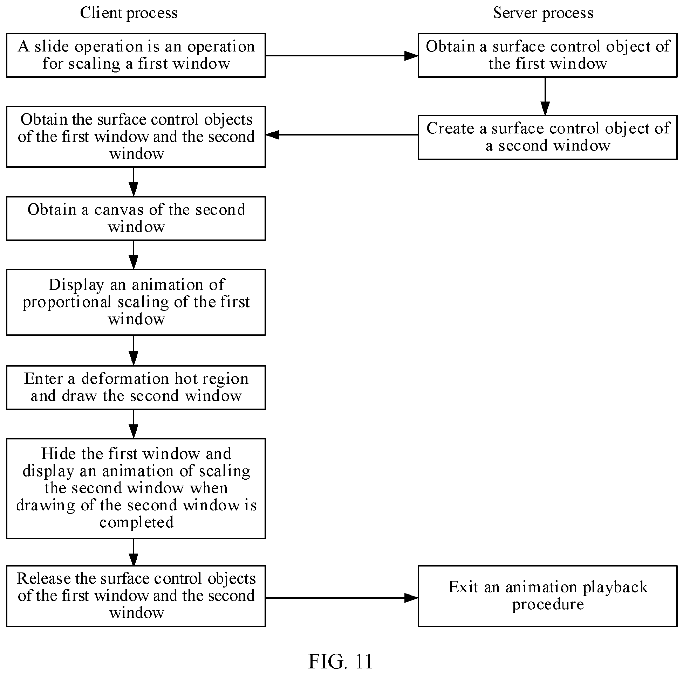

Exemplarily, as shown in FIG. 11, when the display interface displays one or more windows and the client process detects the slide operation of the user on the first window, if it is determined that the slide operation is an operation for scaling the first window, information of the first window is sent to the server process. The server process obtains the surface control object of the first window according to the information of the first window, and creates the surface control object of the second window according to the surface control object of the first window, such that the surface control object of the second window is located below the hierarchy level of the surface control object of the first window. Then, the server process sends the surface control object of the first window and the surface control object of the second window to the client process, and the client process obtains the canvas of the second window according to the surface control object of the second window. Then, the client process determines that proportional scaling is currently performed on the first window according to the position of the first window, and each frame of the first window is sequentially drawn according to the slide position of the slide operation on the display interface, thereby displaying an animation of proportional scaling of the first window on the display interface. When it is detected that the first window enters the deformation hot region, the client process draws a first frame of the second window on the canvas of the second window according to the surface control object of the second window, the size of the rounded corners of the second window, and the content of the second window. When the first frame of the second window is drawn, the client process hides the first window, and the second window is displayed on the display interface. Then, the client process sequentially draws each frame of the second window according to the slide position of the slide operation on the display interface and displays the frame, thereby forming an animation of scaling the second window on the display interface. When the client process detects that the slide operation is canceled, it is determined that scaling of the first window is completed, and the surface control object of the first window and the surface control object of the second window are released. Moreover, the client process sends information of scaling completion of the first window to the server end, and the server process unbinds and releases the surface control object of the second window, thereby exiting the animation playback procedure.

It should be understood that sequence numbers of the steps of the foregoing embodiments do not indicate an execution sequence, and an execution sequence of processes shall be determined based on functions and internal logic thereof, and shall constitute no limitation on an implementation process of the embodiments of this application.

A software system of the electronic device may use a layered architecture, an event-driven architecture, a microkernel architecture, a micro service architecture, or a cloud architecture. In the embodiments of the present invention, an Android system with a layered architecture is used as an example to illustrate a software structure of the electronic device.

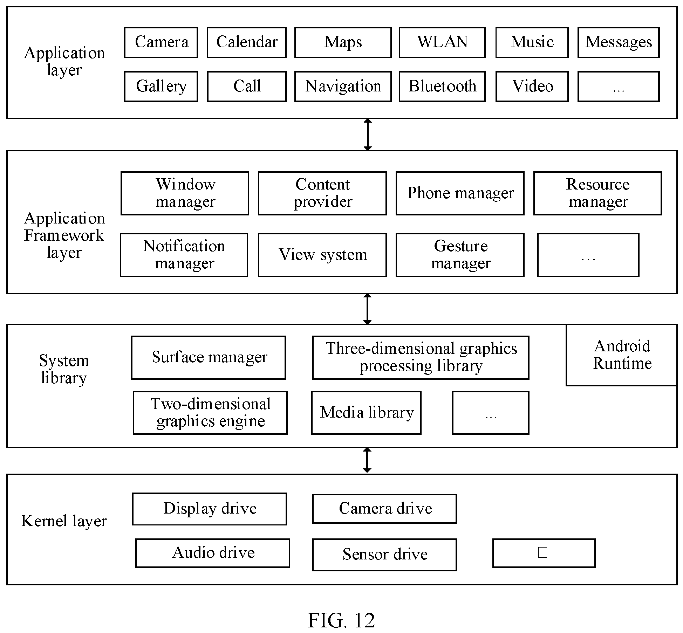

FIG. 12 is a block diagram of a software structure of an electronic device according to an embodiment of this application.

In the layered architecture, software is divided into several layers, and each layer has a clear role and task. The layers communicate with each other through a software interface. In some embodiments, the Android system is divided into four layers, which are an application layer, an application framework layer, an Android runtime (Android runtime) and system library, and a kernel layer from top to bottom.

The application layer may include a series of application packages.

As shown in FIG. 12, the application layer may include applications such as camera, gallery, calendar, phone, map, navigation, WLAN, Bluetooth, music, video, and messages.

The application framework layer provides an application programming interface (application programming interface, API) and a programming framework for applications at the application layer. The application framework layer includes some predefined functions.

As shown in FIG. 12, the application framework layer may include a window manager, a content provider, a view system, a phone manager, a resource manager, a notification manager, a gesture manager, etc.

The window manager is configured to manage a window application. The window manager may acquire a size of a display screen, determine whether there is a status bar, perform screen locking, take a screenshot of the screen, etc.

The content provider is configured to store and obtain data, and make the data accessible to an application. The data may include a video, an image, audio, calls that are made and answered, a browsing history and a bookmark, a phonebook, etc.

The view system includes visual controls such as a control for displaying a text and a control for displaying an image. The view system may be configured to construct an application. The display interface may be composed of one or more views. For example, the display interface including a text message notification icon may include a view for displaying a text and a view for displaying an image.

The phone manager is configured to provide a communication function for the electronic device 100, such as, call status management (including connected, hang-up, etc.).

The resource manager provides various resources for an application, such as a localized character string, an icon, an image, a layout file, and a video file.

The notification manager enables an application to display notification information in the status bar that may be used to convey a message of a notification type, and the message may disappear automatically after a short stay without user interaction. For example, the notification manager is configured to provide a notification of download completion, a message notification, etc. The notification manager may alternatively be a notification that appears on a top status bar of the system in the form of a graph or a scroll bar text, such as a notification of an application running on the background, or a notification that appears on the screen in the form of a dialog window. For example, text information is prompted on the status bar, a prompt tone is made, the electronic device vibrates, or an indicator light flashes.

The Android runtime includes a kernel library and a virtual machine. The Android runtime is responsible for scheduling and managing the Android system.

The kernel library includes two parts: one part is a performance function that the Java language needs to invoke, and the other part is a kernel library of Android.

The application layer and the application framework layer run in the virtual machine. The virtual machine executes java files of the application layer and the application framework layer as binary files. The virtual machine is configured to execute functions such as object lifecycle management, stack management, thread management, security and exception management, and garbage collection.

The system library may include multiple functional modules, such as a surface manager (surface manager), media libraries (Media Libraries), a three-dimensional graphics processing library (e.g., OpenGL ES), and a 2D graphics engine (e.g., SGL).

The surface manager is configured to manage a display subsystem, and provide fusion of 2D and 3D layers to multiple applications.

The media library supports playback and recording of multiple common audio and video formats, and also supports static image files, etc. The media library may support multiple audio and video encoding formats, such as MPEG4, H.264, MP3, AAC, AMR, JPG, and PNG.

The three-dimensional graphics processing library is configured to implement three-dimensional graphics drawing, image rendering, synthesis, layer processing, etc.

The 2D graphics engine is a drawing engine for 2D drawing.

The kernel layer is a layer between hardware and software. The kernel layer at least includes a display drive, a camera drive, an audio drive, and a sensor drive.

A software implementation process of the window display method according to this embodiment of this application is introduced in conjunction with a block diagram of a software structure below.

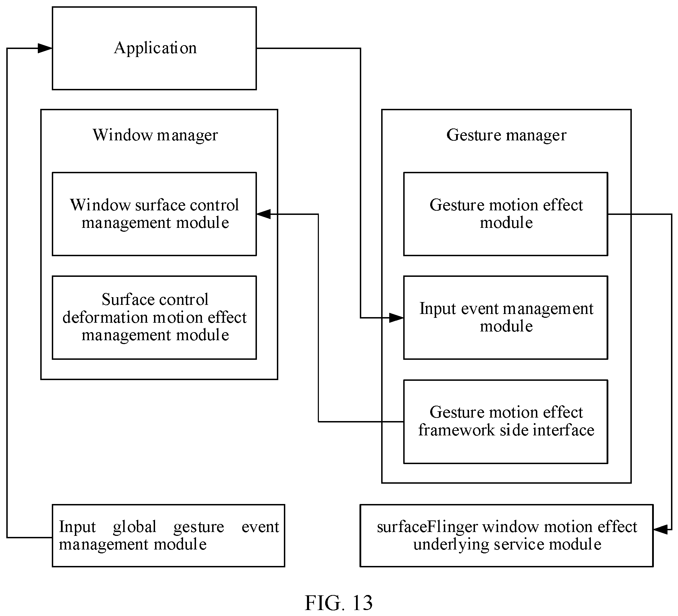

As shown in FIG. 13, the window manager of the application framework layer includes a window surface control management module and a surface control deformation motion effect management module. The gesture manager includes a gesture motion effect module, an input event management module, and a gesture motion effect framework side interface. A sensor drive module of the kernel layer includes an input global gesture event management module and a surfaceFlinger window motion effect underlying service module.

When the input global gesture event management module monitors that the finger touches the display interface, a finger touch object is determined as the first window based on the touch position of the finger on the display interface, and the touch position is sent to the application with the interface displayed in the first window. The application determines that the current operation is a slide operation according to the continuous touch position of the finger. The slide operation is used for scaling the first window. A slide distance and a slide direction obtained through calculation according to the touch position and an instruction for scaling the first window are sent to the input event management module. The input event management module generates an instruction for creating a surface control object of the second window according to the instruction for scaling the first window. The gesture motion effect framework side interface sends the instruction for creating the surface control obj ect of the second window to the window surface control management module. The window surface control management module creates the surface control object of the second window.

Moreover, the input event management module sends the slide distance and the slide direction to the gesture motion effect module. The gesture motion effect module determines the position and size of the first window according to the slide distance and the slide direction. If it is determined that non-proportional scaling is required for the first window according to the position of the first window, the gesture motion effect module sends the position and size of the first window to the surface control deformation motion effect management module. The surface control deformation motion effect management module integrates parameters received from the gesture motion effect module and the window surface control management module, and then sends the parameters to the gesture motion effect module. The gesture motion effect module sends the integrated parameters to the surface Flinger window motion effect underlying service module so as to indicate the surface Flinger window motion effect underlying service module to draw the second window according to the received parameters. After drawing of the second window is completed, the surface control deformation motion effect management module displays a first frame of the second window on the display interface and hides the first window. Then, the surface Flinger window motion effect underlying service module sequentially draws each frame of the second window according to the received parameters, and each frame is displayed on the display interface through the surface control deformation motion effect management module, thereby forming an animation of scaling the second window on the display interface, and displaying a window with normal rounded corners on the display interface in the process of non-proportional scaling of the first window.

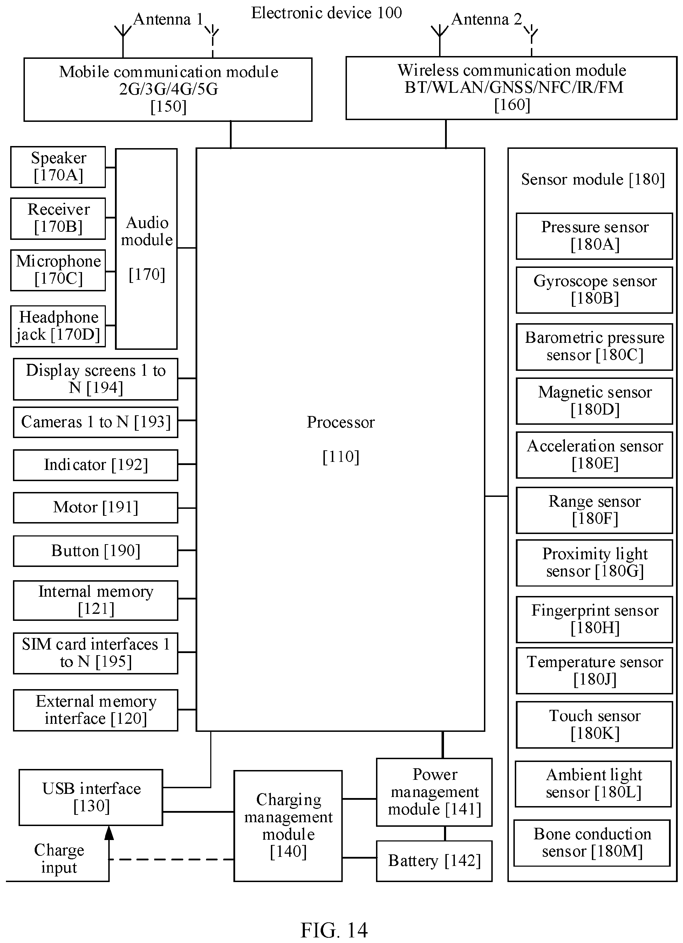

Exemplarily, FIG. 14 is a schematic structural diagram of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headphone jack 170D, a sensor module 180, a button 190, a motor 191, an indicator 192, a camera 193, a display screen 194, a subscriber identification module (subscriber identification module, SIM) card interface 195, etc. The sensor module 180 may include a pressure sensor 180A, a gyroscope sensor 180B, a barometric pressure sensor 180C, a magnetic sensor 180D, an acceleration sensor 180E, a range sensor 180F, a proximity light sensor 180G, a fingerprint sensor 180H, a temperature sensor 180J, a touch sensor 180K, an ambient light sensor 180L, a bone conduction sensor 180M, etc.

It should be understood that an example structure in this embodiment of the present invention does not constitute a specific limitation on the electronic device 100. In some other embodiments of this application, the electronic device 100 may include more or fewer components than those shown in the figure, or some components may be combined, or some components may be divided, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU), etc. Different processing units may be separate devices, or may be integrated into one or more processors.

The controller may generate an operation control signal according to instruction operation code and a time-sequence signal, and control obtaining and executing of instructions.

A memory may also be disposed in the processor 110, configured to store instructions and data. In some embodiments, the memory in the processor 110 is a high-speed cache memory. The memory may store instructions or data recently used or cyclically used by the processor 110. If the processor 110 needs to use the instructions or the data again, it is possible to directly perform invoking from the memory. Repeated access is avoided, and waiting time of the processor 110 is shortened, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, etc.

It should be understood that an interface connection relationship between the modules illustrated in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of multiple the interface connection manners.

A wireless communication function of the electronic device 100 may be implemented by using the antenna 1, the antenna 2, the mobile communication module 150, the wireless communication module 160, the modem processor, the baseband processor, etc.

The antenna 1 and the antenna 2 are configured to transmit and receive an electromagnetic wave signal. Each antenna of the electronic device 100 may be configured to cover one or more communication frequency bands. Different antennas may further be multiplexed to improve utilization of the antennas. For example, the antenna 1 may be multiplexed into a diversity antenna of a wireless local area network. In some other embodiments, the antennas may be used in conjunction with a tuning switch.

The electronic device 100 implements a display function by using the GPU, the display screen 194, the application processor, etc. The GPU is a microprocessor for image processing and connects the display screen 194 and the application processor. The GPU is configured to perform mathematical and geometric calculations, and is configured to render graphics. The processor 110 may include one or more GPUs that execute a program instruction to generate or change display information.

The display screen 194 is configured to display an image, a video, etc. The display screen194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro-oLed, quantum dot light emitting diodes (quantum dot light emitting diodes, QLED), etc. In some embodiments, the electronic device 100 may include 1 or N display screens 194. N is a positive integer greater than 1.

The electronic device 100 may implement a photographing function by using the ISP, the camera 193, the video codec, the GPU, the display screen 194, the application processor, etc.

The external memory interface 120 may be configured to be connected to an external storage card, such as a Micro SD card, to expand a storage capability of the electronic device 100. The external storage card communicates with the processor 110 by using the external memory interface 120, to implement a data storage function. For example, files such as music and a video are stored into the external storage card.

The internal memory 121 may be configured to store computer-executable program code. The executable program code includes an instruction. The internal memory 121 may include a program storage region and a data storage region. The program storage region may store an operating system, an application required by at least one function (e.g., a sound playback function and an image play function), etc. The data storage region may store data (e.g., audio data and a phone book), etc. created when the electronic device 100 is used. In addition, the internal memory 121 may include a high-speed random access memory, and may also include a non-volatile memory, such as at least one magnetic disk storage device, a flash memory device, a universal flash storage (universal flash storage, UFS), etc. The processor 110 runs an instruction stored in the internal memory 121, and/or an instruction stored in the memory disposed in the processor, to perform various function applications and data processing of the electronic device 100.

The electronic device 100 may implement an audio function by using the audio module 170, the speaker 170A, the phone receiver 170B, the microphone 170C, the headphone jack 170D, the application processor, etc., such as music playing and recording.

The pressure sensor 180A is configured to sense a pressure signal, and can convert the pressure signal into an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may be a parallel plate including at least two conductive materials. When a force is applied onto the pressure sensor 180A, a capacitance between electrodes changes. The electronic device 100 determines pressure strength based on a change in the capacitance. When a touch operation is performed on the display screen 194, the electronic device 100 detects strength of the touch operation according to the pressure sensor 180A. The electronic device 100 may also calculate a touch position based on a detection signal of the pressure sensor 180A. In some embodiments, touch operations that are applied to the same touch position but have different touch operation strength may correspond to different operation instructions. For example, when a touch operation with the touch operation strength less than a first pressure threshold is performed on a text message application icon, an instruction of checking a text message is executed. When a touch operation with the touch operation strength greater than or equal to the first pressure threshold is performed on the text message application icon, an instruction of creating a new text message is executed.

The fingerprint sensor 180H is configured to acquire a fingerprint. The electronic device 100 may implement fingerprint unlock, application lock accessing, fingerprint photographing, fingerprint-based call answering, etc. by using a feature of the acquired fingerprint.

The touch sensor 180K is also referred to as a "touch device". The touch sensor 180K may be disposed on the display screen 194. The touch sensor 180K and the display screen 194 form a touchscreen which is also referred to as a "touch control screen". The touch sensor 180K is configured to detect a touch operation on or near the touch sensor 180K. The touch sensor may transfer the detected touch operation to the application processor to determine a type of the touch event. A visual output related to the touch operation can be provided by using the display screen 194. In some other embodiments, the touch sensor 180K may also be arranged on a surface of the electronic device 100 at a position different from that of the display screen 194.

The button 190 includes a power button, a volume button, etc. The button 190 may be a mechanical button, or a touch-type button. The electronic device 100 may receive a button input, and generate a button signal input related to user setting and function control of the electronic device 100.

The indicator 192 may be an indicator light that may be configured to indicate a charging state and a power change, or may be configured to indicate a message, a missed call, a notification, etc.

It should be noted that, the content of information interaction, the execution process, etc. between the apparatuses/units is based on the same concept with this method embodiment of this application, and for specific functions and brought technical effects, reference may be made to the part of the method embodiment for details, which will not be repeated herein.

In the foregoing embodiments, the descriptions of the embodiments have respective focuses. For a part that is not described in detail or recorded in an embodiment, reference may be made to related descriptions in other embodiments.

Those skilled in the art may clearly understand that for the purpose of convenient and brief description, division of the foregoing functional units and modules is used as an example for description only. In practical applications, the foregoing functions may be allocated to and completed by different functional units and modules according to requirements. That is, an internal structure of the apparatus is divided into different functional units or modules to complete all or some of the functions described above. The functional units and modules in the embodiments may be all integrated into one processing unit, may also physically exist separately, or may be integrated into one unit by two or more units. The above integrated unit can be implemented in the form of hardware or in the form of software functional units. In addition, the specific names of the functional units and modules are only for the convenience of distinguishing each other, and are not intended to limit the scope of protection of this application. For specific work processes of the units and modules in the above system, reference may be made to the corresponding processes in the foregoing method embodiments. Details are not described herein again.

When the integrated unit is implemented in the form of a software functional unit and sold or used as an independent product, the integrated unit may be stored in a computer-readable storage medium. Based on such understanding, all or some of processes of the foregoing embodiment methods of this application may be implemented by a computer program instructing relevant hardware. The computer program may be stored in a computer-readable storage medium. When the computer program is executed by a processor, the steps of the foregoing method embodiments can be implemented. The computer program includes computer program code. The computer program code may be in a source code form, an object code form, an executable file form, or some intermediate forms, etc. The computer-readable medium may at least include: any entity or apparatus capable of carrying the computer program code to a photographing apparatus/electronic device, a recording medium, a computer memory, a read-only memory (ROM, Read-Only Memory), a random access memory (RAM, Random Access Memory), an electrical carrier wave signal, a telecommunication signal, and a software distribution medium, such as a U disk, a portable hard drive, a magnetic disk, or an optical disk.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments.

In the embodiments provided in this application, it should be understood that the disclosed apparatus/network device and method may be implemented in other manners. For example, the described apparatus/network device embodiment is merely an example. For example, the module or unit division is merely logical function division and may be other division during actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

Those of ordinary skill in the art may be aware that, the various example units and algorithm steps described in conjunction with the disclosed embodiments can be implemented by electronic hardware, or a combination of computer software and electronic hardware. Whether the functions are executed in a mode of hardware or software depends on particular applications and design constraint conditions of the technical solutions. Those skilled in the art can use different methods to implement the described functions for each particular application, but the implementation cannot be considered outside the scope of this application.

Finally, it should be noted that: the above descriptions are merely specific implementations of this application, but the scope of protection of this application is not limited thereto; and any modification or substitution within the technical scope disclosed by this application shall fall within the scope of protection of this application. Therefore, the scope of protection of this application shall take the scope of protection of the claims as final.

## Claims

1. A window display method, applied to an electronic device (100), the method comprising:
drawing (S901), based on a size of rounded corners of a second window (42, 52) and a content of the second window (42, 52), the second window (42, 52) on a canvas of the second window (42, 52) when determining that non-proportional scaling is required for a first window (41, 51) displayed on a display interface of the electronic device (100), wherein the second window (42, 52) and the first window (41, 51) are of the same size, and a position of the second window (42, 52) on the display interface is the same as a position of the first window (41, 51) on the display interface;
displaying (S902) the second window (42, 52) on the display interface and hiding the first window (41, 51) when drawing of the second window (42, 52) is completed, wherein the size of the rounded corners of the second window (42, 52) scales proportionally to a current size of the first window (41, 51) or remains unchanged; and
displaying (S903) the scaled first window (41, 51) matching the size and the rounded corners of the second window (42, 52) on the display interface and hiding the second window (42, 52) when determining that scaling of the first window (41, 51) is completed.

2. The method according to claim 1, further comprising:
determining that non-proportional scaling is required for the first window (41, 51) when a first operation for scaling the first window (41, 51) is detected and the first window (41, 51) enters a first region on the display interface.

3. The method according to claim 2, wherein before the determining that non-proportional scaling is required for the first window (41, 51), the method further comprises:
performing proportional scaling on the first window (41, 51) when the first operation for scaling the first window (41, 51) is detected and the first window (41, 51) does not enter the first region.

4. The method according to claim 3, wherein before the performing proportional scaling on the first window (41, 51), the method further comprises:
creating a surface control object of the second window (42, 52) according to a surface control object of the first window (41, 51), wherein the surface control object of the second window (42, 52) is at a lower hierarchy level than the surface control object of the first window (41, 51).

5. The method according to any one of claims 2 to 4, wherein the first operation is a slide operation, and after the displaying the second window (42, 52) on the display interface, the method further comprises:
moving, in response to the slide operation, the second window (42, 52) according to a slide position of the slide operation on the display interface.

6. The method according to claim 5, further comprising:
determining that scaling of the first window (41, 51) is completed when detecting that the slide operation is canceled.

7. The method according to any one of claims 1 to 6, wherein the content of the second window (42, 52) is determined according to a Gaussian blur effect of a content of the first window (41, 51).

8. An electronic device (100), comprising a processor (110), wherein the processor (110) is configured to execute a computer program stored in a memory (121) to implement the window display method according to any one of claims 1 to 7.

9. A computer-readable storage medium, storing a computer program, wherein the computer program, when executed by a processor (110), implements the window display method according to any one of claims 1 to 7.

## Patentansprüche

1. Verfahren zur Fensteranzeige, angewendet auf ein elektronisches Gerät (100), wobei das Verfahren umfasst:
Zeichnen (S901) des zweiten Fensters (42, 52) auf einer Zeichenfläche des zweiten Fensters (42, 52) basierend auf einer Größe abgerundeter Ecken eines zweiten Fensters (42, 52) und einem Inhalt des zweiten Fensters (42, 52), wenn bestimmt wird, dass eine nicht-proportionale Skalierung für ein erstes Fenster (41, 51) erforderlich ist, das auf einer Anzeigeoberfläche des elektronischen Geräts (100) angezeigt wird, wobei das zweite Fenster (42, 52) und das erste Fenster (41, 51) die gleiche Größe aufweisen und eine Position des zweiten Fensters (42, 52) auf der Anzeigeoberfläche die gleiche ist wie eine Position des ersten Fensters (41, 51) auf der Anzeigeoberfläche;
Anzeigen (S902) des zweiten Fensters (42, 52) auf der Anzeigeoberfläche und Ausblenden des ersten Fensters (41, 51), wenn das Zeichnen des zweiten Fensters (42, 52) abgeschlossen ist, wobei die Größe der abgerundeten Ecken des zweiten Fensters (42, 52) proportional zu einer aktuellen Größe des ersten Fensters (41, 51) skaliert oder unverändert bleibt; und
Anzeigen (S903) des skalierten ersten Fensters (41, 51), das der Größe und den abgerundeten Ecken des zweiten Fensters (42, 52) entspricht, auf der Anzeigeoberfläche und Ausblenden des zweiten Fensters (42, 52), wenn bestimmt wird, dass das Skalieren des ersten Fensters (41, 51) abgeschlossen ist.

2. Verfahren nach Anspruch 1, ferner umfassend:
Bestimmen, dass eine nicht-proportionale Skalierung für das erste Fenster (41, 51) erforderlich ist, wenn eine erste Operation zum Skalieren des ersten Fensters (41, 51) erkannt wird und das erste Fenster (41, 51) in einen ersten Bereich auf der Anzeigeoberfläche eintritt.

3. Verfahren nach Anspruch 2, wobei das Verfahren vor dem Bestimmen, dass eine nicht-proportionale Skalierung für das erste Fenster (41, 51) erforderlich ist, ferner umfasst:
Durchführen einer proportionalen Skalierung an dem ersten Fenster (41, 51), wenn die erste Operation zum Skalieren des ersten Fensters (41, 51) erkannt wird und das erste Fenster (41, 51) nicht in den ersten Bereich eintritt.

4. Verfahren nach Anspruch 3, wobei das Verfahren vor dem Durchführen der proportionalen Skalierung an dem ersten Fenster (41, 51) ferner umfasst:
Erzeugen eines Oberflächensteuerungsobjekts des zweiten Fensters (42, 52) gemäß einem Oberflächensteuerungsobjekt des ersten Fensters (41, 51), wobei das Oberflächensteuerungsobjekt des zweiten Fensters (42, 52) auf einer niedrigeren Hierarchieebene liegt als das Oberflächensteuerungsobjekt des ersten Fensters (41, 51).

5. Verfahren nach einem der Ansprüche 2 bis 4, wobei die erste Operation eine Gleitoperation ist und das Verfahren nach dem Anzeigen des zweiten Fensters (42, 52) auf der Anzeigeoberfläche ferner umfasst:
Bewegen, als Reaktion auf die Gleitoperation, des zweiten Fensters (42, 52) gemäß einer Gleitposition der Gleitoperation auf der Anzeigeoberfläche.

6. Verfahren nach Anspruch 5, ferner umfassend:
Bestimmen, dass die Skalierung des ersten Fensters (41, 51) abgeschlossen ist, wenn erkannt wird, dass die Gleitoperation abgebrochen wird.

7. Verfahren nach einem der Ansprüche 1 bis 6, wobei der Inhalt des zweiten Fensters (42, 52) gemäß einem Gaußschen Weichzeichnungseffekt eines Inhalts des ersten Fensters (41, 51) bestimmt wird.

8. Elektronische Vorrichtung (100), umfassend einen Prozessor (110), wobei der Prozessor (110) konfiguriert ist, ein in einem Speicher (121) gespeichertes Computerprogramm auszuführen, um das Fensteranzeigeverfahren nach einem der Ansprüche 1 bis 7 zu implementieren.

9. Computerlesbares Speichermedium, das ein Computerprogramm speichert, wobei das Computerprogramm, wenn es von einem Prozessor (110) ausgeführt wird, das Fensteranzeigeverfahren nach einem der Ansprüche 1 bis 7 implementiert.

## Revendications

1. Procédé d'affichage de fenêtre, appliqué à un dispositif électronique (100), le procédé comprenant :
le tracé (S901), sur la base d'une taille de coins arrondis d'une deuxième fenêtre (42, 52) et d'un contenu de la deuxième fenêtre (42, 52), de la deuxième fenêtre (42, 52) sur un canevas de la deuxième fenêtre (42, 52) lors de la détermination qu'une mise à l'échelle non proportionnelle est requise pour une première fenêtre (41, 51) affichée sur une interface d'affichage du dispositif électronique (100), dans lequel la deuxième fenêtre (42, 52) et la première fenêtre (41, 51) sont de la même taille, et une position de la deuxième fenêtre (42, 52) sur l'interface d'affichage est la même qu'une position de la première fenêtre (41, 51) sur l'interface d'affichage ;
l'affichage (S902) de la deuxième fenêtre (42, 52) sur l'interface d'affichage et le masquage de la première fenêtre (41, 51) lorsque le tracé de la deuxième fenêtre (42, 52) est terminé, dans lequel la taille des coins arrondis de la deuxième fenêtre (42, 52) se met à l'échelle de manière proportionnelle à une taille actuelle de la première fenêtre (41, 51) ou reste inchangée ; et
l'affichage (S903) de la première fenêtre (41, 51) mise à l'échelle correspondant à la taille et aux coins arrondis de la deuxième fenêtre (42, 52) sur l'interface d'affichage et le masquage de la deuxième fenêtre (42, 52) lors de la détermination que la mise à l'échelle de la première fenêtre (41, 51) est terminée.

2. Procédé selon la revendication 1, comprenant en outre :
la détermination qu'une mise à l'échelle non proportionnelle est requise pour la première fenêtre (41, 51) lorsqu'une première opération de mise à l'échelle de la première fenêtre (41, 51) est détectée et que la première fenêtre (41, 51) pénètre dans une première région sur l'interface d'affichage.

3. Procédé selon la revendication 2, dans lequel avant la détermination qu'une mise à l'échelle non proportionnelle est requise pour la première fenêtre (41, 51), le procédé comprend en outre :
l'exécution d'une mise à l'échelle proportionnelle sur la première fenêtre (41, 51) lorsqu'une première opération de mise à l'échelle de la première fenêtre (41, 51) est détectée et que la première fenêtre (41, 51) ne pénètre pas dans la première région.

4. Procédé selon la revendication 3, dans lequel avant l'exécution d'une mise à l'échelle proportionnelle sur la première fenêtre (41, 51), le procédé comprend en outre :
la création d'un objet de contrôle de surface de la deuxième fenêtre (42, 52) selon un objet de contrôle de surface de la première fenêtre (41, 51), dans lequel l'objet de contrôle de surface de la deuxième fenêtre (42, 52) est à un niveau de hiérarchie inférieur à celui de l'objet de contrôle de surface de la première fenêtre (41, 51).

5. Procédé selon l'une quelconque des revendications 2 à 4, dans lequel la première opération est une opération de glissement, et après l'affichage de la deuxième fenêtre (42, 52) sur l'interface d'affichage, le procédé comprend en outre :
déplacer, en réponse à l'opération de glissement, la deuxième fenêtre (42, 52) selon une position de glissement de l'opération de glissement sur l'interface d'affichage.

6. Procédé selon la revendication 5, comprenant en outre :
déterminer que la mise à l'échelle de la première fenêtre (41, 51) est terminée lors de la détection que l'opération de glissement est annulée.

7. Procédé selon l'une quelconque des revendications 1 à 6, dans lequel le contenu de la deuxième fenêtre (42, 52) est déterminé selon un effet de flou gaussien d'un contenu de la première fenêtre (41, 51).

8. Dispositif électronique (100), comprenant un processeur (110), dans lequel le processeur (110) est configuré pour exécuter un programme informatique stocké dans une mémoire (121) pour mettre en œuvre le procédé d'affichage de fenêtre selon l'une quelconque des revendications 1 à 7.

9. Support de stockage lisible par ordinateur, stockant un programme informatique, dans lequel le programme informatique, lorsqu'il est exécuté par un processeur (110), met en œuvre le procédé d'affichage de fenêtre selon l'une quelconque des revendications 1 à 7.
